# EUROPÄISCHE PATENTSCHRIFT

(11) **EP 3 171 468 B1**
(45) Veröffentlichungstag und Bekanntmachung des Hinweises auf die Patenterteilung: **30.12.2020**
(21) Anmeldenummer: 16197702.0
(22) Anmeldetag: 08.11.2016
(51) Int. Cl.: H02B 1/30, H02B 1/01

(54) **SCHRANKANORDNUNG UND SCHRANKVERBINDUNGSSYSTEM**
CABINET ARRANGEMENT AND CABINET CONNECTION SYSTEM
DISPOSITION D'ARMOIRE ET SYSTÈME DE LIAISON D'ARMOIRE

(30) Priorität: 23.11.2015 DE 102015120255
(43) Veröffentlichungstag der Anmeldung: 24.05.2017
(73) Patentinhaber: ABB Schweiz AG, 5400 Baden (CH)
(72) Erfinder: Diesing, Frank, 76547 Sinsheim (DE); Roth, Michael, 77880 Sasbach (DE)
(74) Vertreter: Marks, Frank

(56) Entgegenhaltungen:
- EP-A2- 2 429 046
- DE-A1- 19 737 668

## Beschreibung

Die Erfindung betrifft eine Schrankanordnung gemäß dem Oberbegriff des Patentanspruchs 1 .

Aus der EP 2 429 046 A2 ist bekannt, eine kraftschlüssige Verbindung von zwei Schaltschränken durch ein Schaltschrankverbindungsprofil herzustellen. Die DE 197 37 668 A1 offenbart eine Anreihverbindung von Schaltschränken, bei der ein Verbinder plattenartige Befestigungsabschnitte mit Schraubaufnahmen aufweist.

Schaltschränke sind seit langem aus dem Stand der Technik bekannt, wobei in diesen elektrische und/ oder elektronische Komponenten angeordnet werden, welche gegenüber der Umwelt zu schützen und/ oder abzuschirmen sind. Derartige Schaltschränke sind aus Rahmengestellen aufgebaut, welche Profilstäbe oder Profilstangen besitzen, welche an den Ecken durch Eckverbinder miteinander verbunden sind. Zur Fertigstellung des Schaltschrankes werden Seitenwände, eine Deckwand, eine Rückwand sowie eine Bodenwand eingesetzt, wobei eine Frontwand zumeist als Tür ausgebildet ist. Im Bereich des Bodens ist der Schaltschrank über Sockelteile oder einen Sockel auf dem Boden aufgestellt.

Aus dem Stand der Technik sind Stand-Schaltschränke, Klemmenkästen, Wandgehäuse und Anreih-Schaltschränke bekannt. Für Anreih-Schaltschränke sind Einzelelemente ohne Seitenwände verfügbar. Hierbei lassen sich Kabel und Leitungen durch mehrere Einzelelemente verlegen, wobei an den Enden der Schaltfelder Wände angebracht werden können.

Bei Anreih-Schaltschränken, das heißt bei der Aneinanderreihung von mehreren Schaltschränken, sind diese fest miteinander zu verbinden. Die bekannten Verbindungsmöglichkeiten von Schaltschränken sind auf das jeweilige Gehäusekonzept ausgelegt, wobei diese von innen, zumeist durch Schraub- oder Klemmverbindungen, verbunden werden.

In nachteiliger Weise ist der zur Montage zur Verfügung stehende Platz im Inneren des Schaltschrankes sehr eingeschränkt, sobald die elektrischen Komponenten montiert sind. Die bekannten Verbindungen von Schaltschränken sind daher insgesamt nur sehr aufwändig und in unhandlicher Weise zu montieren.

Ausgehend von diesem Stand der Technik liegt der Erfindung die Aufgabe zugrunde, ein Schaltschrankverbindungssystem bereitzustellen, durch welches sich Schaltschränke einfacher aneinanderreihen und montieren lassen.

Erfindungsgemäß wird diese Aufgabe durch eine Schrankanordnung mit den Merkmalen des Patentanspruchs 1 gelöst.

Danach umfasst das Schrankverbindungssystem mindestens eine erste langgestreckte Gehäusekantenverbindungsleiste, welche dafür vorgesehen ist, nach innen ragend mit zumindest einer Kante mindestens einer Wand des ersten Schaltschrankes verbunden zu werden beziehungsweise verbunden zu sein, mindestens eine zweite langgestreckte Gehäusekantenverbindungsleiste, welche dafür vorgesehen ist, nach innen ragend mit zumindest einer Kante mindestens einer Wand des zweiten Schaltschrankes verbunden zu werden beziehungsweise verbunden zu sein, und mindestens ein langgestrecktes Verbindungselement, welches dafür vorgesehen ist, mit den Gehäusekantenverbindungsleisten von außen wiederlösbar verbunden zu werden beziehungsweise verbunden zu sein, so dass eine Verbindung, insbesondere eine form- und/oder kraftschlüssige Verbindung, der Schaltschränke bewirkbar oder bewirkt ist.

Die Gehäusekantenverbindungsleisten sind unabhängig und separat voneinander an die jeweiligen Kanten der Wände des ersten und des zweiten Schrankes, insbesondere Schalt-, Verteiler oder Zählerschrankes, zu montieren beziehungsweise anzuordnen und/oder montier- beziehungsweise anordenbar. In vorteilhafter Weise lassen sich die Gehäusekantenverbindungsleisten sowohl bei teilmontierten, stehenden Schalt-, Zähler- oder Verteilerschränken, als auch bei liegenden Schalt-, Zähler- oder Verteilerschränken mit den jeweiligen Kanten der Wände verbinden. Die jeweilige Gehäusekantenverbindungsleiste wird dabei insbesondere mit einer Kante der Deckwand und/ oder einer Kante der Bodenwand verbunden.

Das Verbindungselement ist dafür vorgesehen, die Gehäusekantenverbindungsleisten zu verbinden, wobei das Verbindungselement erst nach der Montage der jeweiligen Gehäusekantenverbindungsleisten von außen montiert wird. Somit lassen sich mehrere Schalt- oder Verteilerschränke sowohl liegend als auch stehend miteinander verbinden. Bei einer beispielhaften geometrischen Ausführungsform des Verbindungselementes weist dieses einen keilförmigen Querschnitt auf, welcher an den Oberflächenverlauf der zusammengesetzten Gehäusekantenverbindungsleisten angepasst ist und sich somit nahtlos in die zusammengesetzten Gehäusekantenverbindungsleisten einsetzen lässt. Der in dem jeweiligen Schrank, insbesondere Schalt-, Zähler- oder Verteilerschrank, insgesamt vorhandene Raum lässt sich somit in vorteilhafter Weise insgesamt besser ausnutzen.

Es ist ein Schrankverbindungssystem bereit gestellt, welches eine Verbindung von mindestens zwei Schalt- und/oder Zähler- und/oder Verteilerschränken von außen ermöglicht. In vorteilhafter Weise lassen sich Komponenten in einem Schalt-, Zähler- oder Verteilerschrank montieren, ohne dass dabei in diesem zusätzlicher Raum zur Montage der Verbindung zweier Schalt- und/oder Zähler- und/oder Verteilerschränke freigehalten werden muss.

Bei einer alternativen Ausführungsvariante ist vorsehbar, dass zumindest eine Gehäusekantenverbindungsleiste an die jeweilige Gehäusewand angeformt oder einstückig mit dieser ausgebildet ist.

Bei einer vorteilhaften Variante des Schrankverbindungssystems ist vorgesehen, dass jede der Gehäusekantenverbindungsleisten mindestens eine Ausnehmung aufweist, wobei das Verbindungselement mindestens eine Rastvorrichtung aufweist, weiche dafür vorgesehen ist, mit der mindestens einen Ausnehmung der jeweiligen Gehäusekantenverbindungsleiste verrastet zu werden beziehungsweise mit dieser zu verrasten. Durch die Verrastung des Verbindungselementes mit den jeweiligen Gehäusekantenverbindungsleisten ist in vorteilhafter Weise eine einfach zu montierende und stabile Verbindung der jeweiligen Schränke, insbesondere der Schalt- und/oder Zähler- und/oder Verteilerschränke sicher gestellt. Die Rastvorrichtung in Zusammenwirkung mit den Ausnehmungen ist in vorteilhafter Weise so ausgeführt, dass die Verbindung nach dem Einrasten unter einer Vorspannung steht. Die Vorspannung ist beispielweise durch eine integrierte Federverbindung in einem Rastmechanismus bewirkt, wodurch die jeweiligen Schränke in vorteilhafter Weise spielfrei miteinander verbunden sind.

Bei einer bevorzugten Variante ist das Verbindungselement dafür vorgesehen, mit der jeweiligen Gehäusekantenverbindungsleiste durch mindestens jeweils ein Befestigungsmittel verbunden zu werden beziehungsweise zu sein, wobei das Befestigungsmittel derart anordenbar ist, dass die Schränke, insbesondere Schalt- und/oder Zähler und/oder Verteilerschränke, in mindestens zwei Raumrichtungen, insbesondere in Hoch- und Querrichtung, gegeneinander verspannbar sind. In vorteilhafter Weise sind die Befestigungsmittel daher so angeordnet, dass sie die Schränke in zwei Raumrichtungen gleichzeitig zueinander verspannen. Des Weiteren lassen sich die Schränke, insbesondere die Schalt- und/oder Zähler- und/oder Verteilerschränke, durch die Befestigungsmittel so zueinander ausrichten, dass sich jeweils zwei Schränke bezüglich der Höhe zueinander justieren lassen. Die Montierbarkeit der Schränke, insbesondere der Schalt- und/oder Zähler- und/oder Verteilerschränke zueinander ist somit insgesamt vereinfacht.

Bei einer weiteren bevorzugten Ausführungsform sind die Befestigungsmittel als Schraubverbindungen ausgebildet, welche unter einem Winkel zwischen 10 bis 80 Grad, bevorzugt unter einem Winkel von näherungsweise 45 Grad, in Querschnittsansicht zur Erstreckungsrichtung der Wände, in die jeweiligen Gehäusekantenverbindungsleisten eingreifen. Durch diese Ausführungsform ist durch wenigstens vier Schraubverbindungen dauerhaft eine feste und schnell ausführbare Verspannung der Schränke, insbesondere der elektrischen Schalt- und/oder Zähler- und/oder Verteilerschränke zueinander bewirkt. Die Schränke lassen sich somit in vorteilhafter Weise durch Nachjustierung der Schraubverbindungen bezüglich der Höhe zueinander ausrichten und gleichzeitig gegeneinander verspannen.

Erfindungsgemäss ist vorgesehen, dass mindestens eine der Gehäusekantenverbindungsleisten in ihrer Längserstreckungsrichtung zumindest eine nutförmige Ausnehmung aufweist, in welche zumindest eine der Wände einschiebbar und von dieser halterbar ist. Durch diese Ausführungsform lassen sich insbesondere die Decken- und/ oder die Bodenwände in vorteilhafter Weise in die jeweiligen Nuten oder nutförmigen Ausnehmungen der Gehäusekantenverbindungsleisten einschieben und von diesen haltern. Somit ist eine einfache und schnell montierbare oder bewirkbare beziehungsweise herstellbare Verbindung bereitgestellt, weiche ohne den Einsatz zusätzlicher Werkzeuge wieder lösbar ist. Die Gehäusekantenverbindungsleisten mit den in die jeweiligen nutförmigen Ausnehmungen eingeschobenen Wänden werden so mit den weiteren Wänden, beispielweise den Seitenwänden, verbunden, dass die in den jeweiligen nutförmigen Ausnehmungen gehalterten Wände nicht in Axialrichtung der nutförmigen Ausnehmungen bewegbar sind.

Bei einer weiteren vorteilhaften Ausführungsform sind näherungsweise senkrecht zu den Wänden jeweils weitere Wände angeordnet, wobei bevorzugt zwischen dem Verbindungselement und mindestens einer der Gehäusekantenverbindungsleisten mindestens ein Verbindungsprofil befestigbar ist, welches insbesondere dafür vorgesehen ist, einen Spalt zwischen den weiteren Wänden zu überdecken. Näherungsweise senkrecht zu den Wänden, insbesondere der Decken- und der Bodenwand, sind jeweils weitere Wände, insbesondere Front- oder Rückwände, angeordnet. Die Spalte, welche zwischen Front- oder Rückwänden aufgrund der Verbindung durch das Schrankverbindungssystem, insbesondere Schalt-, Zähler- und Verteilerschrankverbindungssystem, entstehen, werden somit durch Verbindungsprofile verschlossen, welche in vorteilhafter Weise zwischen mindestens einer der Gehäusekantenverbindungsleisten und dem Verbindungselement angeordnet sind. Durch die Befestigung eines Verbindungsprofils zwischen dem Verbindungselement und mindestens einer der Gehäusekantenverbindungsleisten ist in vorteilhafter Weise die Verbindung zusätzlich versteift und weiterhin einfach montierbar.

Es ist ein Schrank, insbesondere Schalt-, Zähler- oder Verteilerschrank durch das Schrankverbindungssystem, insbesondere das Schalt-, Zähler- und Verteilerschrankverbindungssystem, mit einem weiteren Schrank, insbesondere einem weiteren Schalt-, Zähler- oder Verteilerschrank, verbunden.

Die Vorteile dieser Ausführungsform sind den Ausführungen zu dem unabhängigen Anspruch und den abhängigen Ansprüchen sowie der nachfolgenden Beschreibung zu entnehmen.

Schalt- und/oder Zähler- und/oder Verteilerschränke sind bei einer Aneinanderreihung fest miteinander zu verbinden. Hierzu ist eine Verbindungsmöglichkeit notwendig, die leicht beziehungsweise möglichst einfach an den Gehäusen der Schalt- oder Verteilerschränke montierbar ist und dauerhaft eine solide und/oder stabile Aneinanderreihung der Schränke gewährleistet.

Durch das hier beschriebene Schrankverbindungssystem bietet ein zerlegbarer Schalt-, Zähler- oder Verteilerschrank die Möglichkeit, in Aneinanderreihung verwendet zu werden. So können auch größere Schalt- und/oder Zähler- und/oder Verteileranlagen modulbauartig erstellt und einzelne Schalt- und/oder Zähler- und/oder Verteilerschränke mit einem sogenannten Kabelcontainer erweitert werden, der möglichst auf gleichen Teilen von Standardschränken basiert und sich nur in der Breite unterscheidet. Das hier beschriebene Schaltschrankverbindungssystem erlaubt eine leichte Montage und ermöglicht vergleichsweise große Öffnungen für Durch- und/ oder Querverbindungen für Kabel- oder Kupferschienenquerschnitte.

Anhand der in den Zeichnungen dargestellten Ausführungsbeispiele sollen die Erfindung, weitere Ausführungsformen und Vorteile näher beschrieben und dargelegt werden.

Es zeigen
- Fig. 1: ein exemplarisches erstes Schrankverbindungssystem in schematischer Quersch nittsansicht,
- Fig. 2: ein exemplarisches zweites Schrankverbindungssystem in Draufsicht,
- Fig. 3: ein exemplarisches drittes Schrankverbindungssystem in einer Innenansicht,
- Fig. 4: ein exemplarisches viertes Schrankverbindungssystem mit zwei Verbindungsprofilen in Draufsicht und
- Fig. 5: ein exemplarisches fünftes Schrankverbindungssystem in Draufsicht mit zwei Verbindungsprofilen.

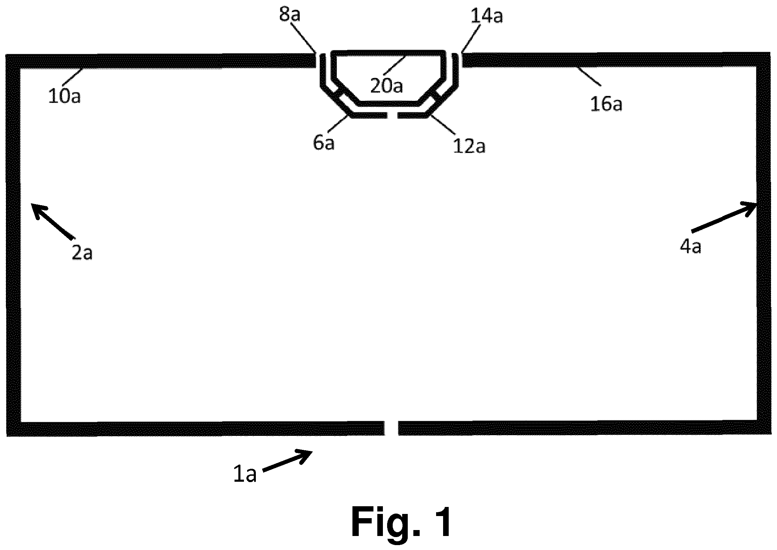

Fig. 1 zeigt ein exemplarisches erstes Schrankverbindungssystem, insbesondere ein Schaltschrankverbindungssystem 1a in Querschnittsansicht. Ein erster Schaltschrank 2a mit einer ersten Wand 10a ist dabei durch das Schrankverbindungssystem 1a über eine zweite Wand 16a des zweiten Schaltschranks 4a verbunden. Das Schaltschrankverbindungssystem 1a umfasst eine erste Gehäusekantenverbindungsleiste 6a, welche durch die erste Kante 8a mit der ersten Wand 10a verbunden ist.

Des Weiteren umfasst das Schrankverbindungssystem, insbesondere das beispielhaft gezeigte Schaltschrankverbindungssystem 1a eine zweite Gehäusekantenverbindungsleiste 12a, welche über die zweite Kante 14a mit der zweiten Wand 16a verbunden ist. Die Gehäusekantenverbindungsleisten 6a, 12a werden vor Montage des Schaltschrankverbindungssystems 1a so mit der jeweiligen Wand 10a, 16a verbunden, dass diese in den Raum des jeweiligen Schaltschrankes 2a, 4a ragen.

In Fig. 1 bilden die erste Wand 10a und die zweite Wand 16a beispielhaft jeweils die Deckenwand des jeweiligen Schaltschrankes 2a, 4a, wobei diese Deckenwände mit den jeweiligen Seitenwänden der Schaltschränke 2a, 4a verbunden sind. Das Verbindungselement 20a ist in die beiden U-förmig angeordneten Gehäusekantenverbindungsleisten 6a, 12a eingesetzt, so dass nach außen beispielhaft ein bündiger und insbesondere formschlüssiger Abschluss mit der ersten Wand 10a und der zweiten Wand 16a bewirkt ist.

Die Schaltschränke 2a, 4a weisen, neben Front und Rückwand, jeweils nur drei Wände auf, eine Deckenwand 10a, 16a eine Seitenwand und eine Bodenwand, wobei die aneinandergrenzenden Seiten zueinander geöffnet sind, so dass eine Aneinanderreihung der Schaltschränke 2a, 4a ermöglicht und bewirkt ist.

Die Verbindung zwischen dem Verbindungselement 20a und den jeweiligen Gehäusekantenverbindungsleisten 6a, 12a ist in Fig. 1 schematisch durch die dazwischen angeordneten Querstriche dargestellt.

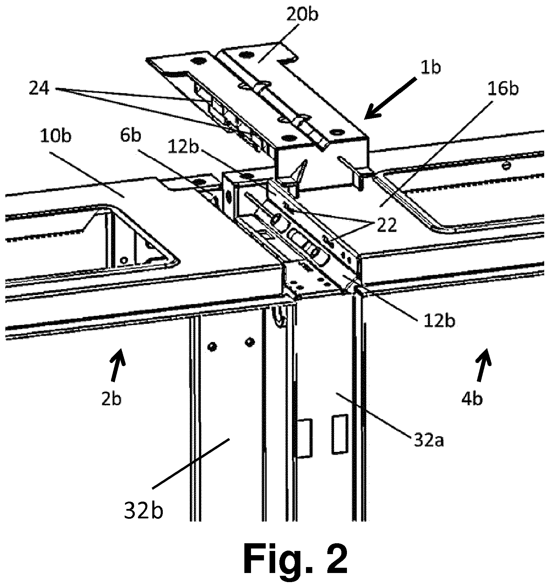

Fig. 2 zeigt ein zweites Schrankverbindungssystem 1b zur mechanischen Verbindung von mindestens zwei Schaltschränken 2b, 4b. Es umfasst mindestens eine erste langgestreckte Gehäusekantenverbindungsleiste 6b, welche nach innen ragend mit zumindest einer Kante mindestens einer Wand 10b des ersten Schaltschrankes 2b verbunden ist oder verbindbar ist, mindestens eine zweite langgestreckte Gehäusekantenverbindungsleiste 12b, welche nach innen ragend mit zumindest einer Kante mindestens einer Wand 16b des zweiten Schaltschrankes 4b verbunden ist oder verbindbar ist, und mindestens ein langgestrecktes Verbindungselement 20b, welches dafür vorgesehen ist, mit den Gehäusekantenverbindungsleisten 6b, 12b von außen wiederlösbar verbunden zu werden beziehungsweise zu sein, so dass eine Verbindung der Schaltschränke 2b, 4b bewirkt ist.

Jede der Gehäusekantenverbindungsleisten 6b, 12b weist mindestens eine Ausnehmung 22 auf, wobei das Verbindungselement 20b mindestens eine Rastvorrichtung 24 aufweist, welche mit der mindestens einen Ausnehmung 22 der jeweiligen Gehäusekantenverbindungsleiste 6b, 12b verrastbar ist oder verrastet ist.

Konkret zeigt Fig. 2 ein exemplarisches zweites Schaltschrankverbindungssystem 1b in Draufsicht. Das zweite Schaltschrankverbindungssystem 1b umfasst zwei Gehäusekantenverbindungsleisten 6b, 12b, welche mit der jeweiligen Kante der ersten Wand 10b und der zweiten Wand 16b verbunden sind. Die jeweiligen Gehäusekantenverbindungsleisten 6b, 12b weisen dabei jeweils Ausnehmungen 22 auf, wobei das Verbindungselement 20b beidseitig Rastvorrichtungen 24 aufweist, welche in die Ausnehmungen 22 einrastbar sind. Die Ausnehmungen 22 können dabei, entsprechend der Darstellung, als Ausschnitte aus den Gehäusekantenverbindungsleisten 6b, 12b gefertigt sein. In einer möglichen Ausführungsform sind die Rastvorrichtungen 24 federnd in Hakenform ausgeführt, welche in die Ausnehmungen 22 einrastbar sind beziehungsweise vorgesehen sind in die Ausnehmungen 22 einzurasten.

Ein erstes Verbindungsprofil 32a ist an mindestens einer seiner Außenseiten abgekantet und mit dieser mindestens einen abgekanteten Außenseite zwischen dem Verbindungselement 20b und den beiden Gehäusekantenverbindungsleisten 6b, 12b einrastbar. Das erste Verbindungsprofil 32a ist dabei an einer Vorderseite oder Frontwand angeordnet. Ein zweites Verbindungsprofil 32b ist an der Rückseite oder Rückwand angeordnet.

In einer weiteren beispielhaften Ausführungsform können nicht gezeigte Rastnasen auch an dem Verbindungselement 20b und/oder den Gehäusekantenverbindungsleisten 6b, 12b vorgesehen sein und in nicht gezeigte Ausnehmungen des ersten Verbindungsprofils 32a eingreifen. Die abgekantete Außenseite des ersten Verbindungsprofils 32a kann beispielweise auch nicht gezeigte Rastnasen aufweisen, welche dafür vorgesehen sind, in entsprechende nicht gezeigte Ausnehmungen der Gehäusekantenverbindungsleisten 6b, 12b und/ oder in nicht gezeigte Ausnehmungen des Verbindungselementes 20b eingerastet zu werden.

Fig. 2 zeigt die zur Verbindung von Gehäusen von Schaltschränken 2b, 4b, aber auch von Zähler und/oder Verteilerschränken, zu verwendenden Bauteile und deren Anzahl. Für den Aufbau sind für zwei unterschiedliche Gehäusebautiefen je zwei Gehäuseverbinder oder Verbindungselemente 20b sowie für die unterschiedlichen Gehäusebauhöhen je ein Verbindungsprofil 32a für eine Vorderseite und je ein Verbindungsprofil 32b für eine Rückseite erforderlich. Die zu verbindenden Gehäuse der Schaltschränke 2b, 4b können aufgrund ihrer Zerlegbarkeit unabhängig voneinander separat montiert und erst in einem letzten Schritt miteinander verbunden werden.

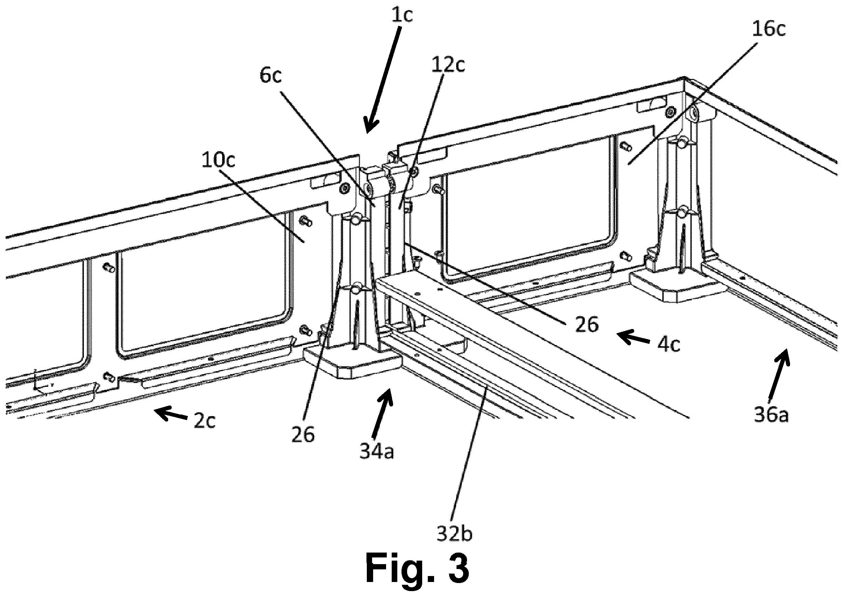

Fig. 3 zeigt, dass mindestens eine der Gehäusekantenverbindungsleisten 6c, 12c in ihrer Längserstreckungsrichtung zumindest eine nutförmige Ausnehmung 26 aufweist, in welche zumindest eine der Wände 10c, 16c einschiebbar und von dieser halterbar ist.

Fig. 3 zeigt ein exemplarisches drittes Schrankverbindungssystem 1c in einer Innenansicht der jeweiligen Schaltschränke 2c, 4c. Die Schaltschränke 2c, 4c weisen wiederum jeweils eine Wand 10c, 16c auf, wobei jede der Wände 10c, 16c dafür vorgesehen ist, in die jeweilige Gehäusekantenverbindungsleiste 6c, 12c eingesetzt zu werden. Die jeweiligen Gehäusekantenverbindungsleisten 6c, 12c weisen nutförmige Ausnehmungen 26 auf, in welche die jeweiligen Wände 10c, 16c einschiebbar sind, wobei die nutförmigen Ausnehmungen 26 in Fig. 3 von Versteifungsrippen der jeweiligen Gehäusekantenverbindungsleiste 6c, 12c verdeckt sind. Die nutförmigen Ausnehmungen 26 der Gehäusekantenverbindungsleisten 6c, 12c sind so ausgeführt, dass sich die Wände 10c, 16c in diese einführen lassen und von diesen klemmend, insbesondere form- und/oder kraftschlüssig, gehaltert sind. Des Weiteren ist ein zweites Verbindungsprofil 32b mit den Gehäusekantenverbindungsleisten 6c, 12c verbunden, wobei das zweite Verbindungsprofil 32b senkrecht von den verbundenen Gehäusekantenverbindungsleisten 6c, 12c abweist. Die Schaltschränke 2c, 4c weisen jeweils weitere Wände 34a, 36a auf, welche senkrecht zu den jeweiligen Wänden 10c, 16c der Decken der Schaltschränke 2c, 4c angeordnet sind. Die weiteren Wände 34a, 36a bilden Rückwände der Schaltschränke 2c, 4c.

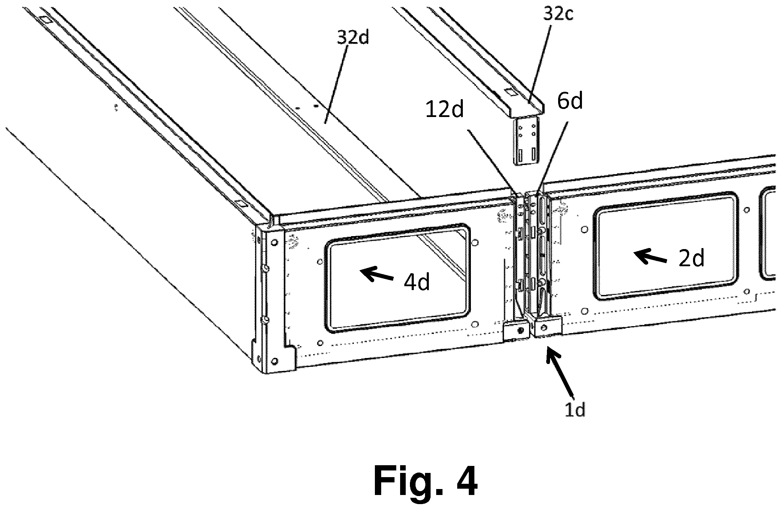

Fig. 4 zeigt ein exemplarisches viertes Schrankverbindungssystem 1d mit zwei Verbindungsprofilen 32c, 32d in Draufsicht. Die beiden beispielhaft dargestellten Gehäusekantenverbindungsleisten 6d, 12d des Schrankverbindungssystems 1d weisen Befestigungsvorrichtungen auf, welche hier beispielhaft nutförmige Ausnehmungen sind. Die abgewinkelten Enden der Verbindungsprofile 32c, 32d sind dafür vorgesehen, in die nutförmigen Ausnehmungen eingeschoben und in diesen gehaltert zu werden.

Fig. 4 zeigt die Position und die Montage eines ersten Verbindungsprofils 32c an der Vorderseite ohne weitere Befestigungsteile. Das erste Verbindungsprofil 32c wird analog zu gehäuseseitigen Mantelblechteilen in Führungsnuten der Gehäusekantenverbindungsleisten 6d, 12d eingeschoben.

In einer weiteren Ausführungsform weisen die abgewinkelten Verbindungsprofile 32c, 32d nicht gezeigte Rastnasen auf, welche dafür vorgesehen und verwendbar sind, in nicht gezeigte Ausnehmungen der Gehäusekantenverbindungsleisten 6d, 12d eingerastet zu werden. Durch ein nicht dargestelltes Verbindungselement werden die Verbindungsprofile 32c, 32d durch Einrasten von Rastnasen in jeweilige Ausnehmungen mit den Gehäusekantenverbindungsleisten 6d, 12d verbunden.

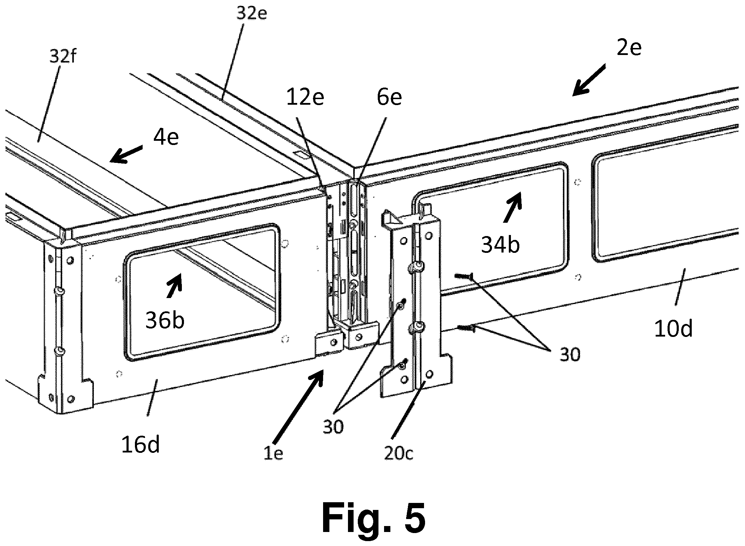

Fig. 5 zeigt, dass das Verbindungselement 20c dafür vorgesehen und verwendbar ist, mit der jeweiligen Gehäusekantenverbindungsleiste 6e, 12e durch mindestens jeweils ein Befestigungsmittel 30 verbunden zu werden, wobei das Befestigungsmittel 30 dafür vorgesehen ist, derart angeordnet zu werden, dass die Schaltschränke 2e, 4e in mindestens zwei Raumrichtungen gegeneinander verspannbar sind.

Die vier Befestigungsmittel 30 sind Schraubverbindungen, welche dafür vorgesehen und einsetzbar sind, unter einem Winkel zwischen 10 bis 80 Grad, bevorzugt unter einem Winkel von 45 Grad, in Querschnittsansicht zur Erstreckungsrichtung der Wände 10d, 16d in die jeweiligen Gehäusekantenverbindungsleisten 6e, 12e einzugreifen.

Fig. 5 zeigt auch, dass senkrecht zu den Wänden 10d, 16d jeweils weitere Wände 34b, 36b angeordnet sind, wobei zwischen einem Verbindungselement 20c und mindestens einer der Gehäusekantenverbindungsleisten 6e, 12e mindestens ein Verbindungsprofil 32f befestigbar ist, welches dafür vorgesehen ist, einen Spalt zwischen den weiteren Wänden 34b, 36b zu überdecken.

Fig. 5 zeigt ein exemplarisches fünftes Schrankverbindungssystem 1e in Draufsicht mit zwei Verbindungsprofilen 32e, 32f. Das dargestellte Schrankverbindungssystem 1e, hier insbesondere ein Schaltschrankverbindungssystem, umfasst zwei Gehäusekantenverbindungsleisten 6e, 12e, welche durch ein drittes Verbindungselement 20c miteinander verbindbar sind.

Des Weiteren sind Befestigungsmittel 30 dargestellt, welche in dieser beispielhaften Explosionsdarstellung vier Schraubverbindungen sind. Die Schraubverbindungen umfassen vier Schrauben, die in Gewinde einschraubbar sind, wodurch das Verbindungselement 20c mit den Gehäusekantenverbindungsleisten 6e, 12e verbindbar ist.

Die Verbindungsprofile 32e, 32f sind zwischen die Gehäusekantenverbindungsleisten 6e, 12e und dem Verbindungselement 20c einsetzbar. Senkrecht zu den Wänden 10d, 16d, welche beispielhaft in Nuten der Gehäusekantenverbindungsleisten 6e, 12e eingeschoben dargestellt sind, sind weitere Wände 34b, 36b angeordnet. Zwischen den Wänden 34b, 36b bildet sich im Bereich der zusammengesetzten Gehäusekantenverbindungsleisten 6e, 12e jeweils ein Spalt, welcher von dem zweiten Verbindungsprofil 32f verdeckt wird. Die Wände 34b, 36b sind dabei als Rückwände ausgebildet.

Die Position und Montage des jeweiligen Verbindungselements oben und unten ist anhand des Verbindungselements 20c in Fig. 5 dargestellt. Das Verbindungselement 20c wird bei der Montage an der Verbindungsstelle mit dem Verbindungsprofil 32e an der Vorderseite verrastet und zusätzlich mit vier Schrauben fixiert.

### Bezugszeichenliste

- 1a: Erstes Schrankverbindungssystem
- 1b: Zweites Schrankverbindungssystem
- 1c: Drittes Schrankverbindungssystem
- 1d: Viertes Schrankverbindungssystem
- 1e: Fünftes Schrankverbindungssystem
- 2a: Erster Schaltschrank
- 2b: Erster Schaltschrank
- 2c: Erster Schaltschrank
- 2d: Erster Schaltschrank
- 2e: Erster Schaltschrank
- 4a: Zweiter Schaltschrank
- 4b: Zweiter Schaltschrank
- 4c: Zweiter Schaltschrank
- 4d: Zweiter Schaltschrank
- 4e: Zweiter Schaltschrank
- 6a: Erste Gehäusekantenverbindungsleiste
- 6b: Erste Gehäusekantenverbindungsleiste
- 6c: Erste Gehäusekantenverbindungsleiste
- 6d: Erste Gehäusekantenverbindungsleiste
- 6e: Erste Gehäusekantenverbindungsleiste
- 8a: Erste Kante
- 10a: Erste Wand
- 10b: Erste Wand
- 10c: Erste Wand
- 10d: Erste Wand
- 12a: Zweite Gehäusekantenverbindungsleiste
- 12b: Zweite Gehäusekantenverbindungsleiste
- 12c: Zweite Gehäusekantenverbindungsleiste
- 12d: Zweite Gehäusekantenverbindungsleiste
- 12e: Zweite Gehäusekantenverbindungsleiste
- 14a: Zweite Kante
- 16a: Zweite Wand
- 16b: Zweite Wand
- 16c: Zweite Wand
- 16d: Zweite Wand
- 20a: Verbindungselement
- 20b: Verbindungselement
- 20c: Verbindungselement
- 22: Ausnehmung
- 24: Rastvorrichtung
- 26: nutförmige Ausnehmung
- 30: Befestigungsmittel
- 32a: Erstes Verbindungsprofil
- 32b: Zweites Verbindungsprofil
- 32c: Erstes Verbindungsprofil
- 32d: Zweites Verbindungsprofil
- 32e: Erstes Verbindungsprofil
- 32f: Zweites Verbindungsprofil
- 34a: Erste weitere Wand
- 34b: Erste weitere Wand
- 36a: Zweite weitere Wand
- 36b: Zweite weitere Wand

## Patentansprüche

1. Schrankanordnung mit wenigstens zwei in Aneinanderreihung und jeweils mittels einem Schrankverbindungssystem (1a-1e) verbundenen elektrischen Schränken, insbesondere verbundenen Schalt- und/oder Zähler- und/oder Verteilerschränken, wobei das Schrankverbindungssystem (1a-1e) zur mechanischen Verbindung der mindestens zwei Schränke (2a-2e, 4a-4e), insbesondere Schalt- und/oder Verteiler- und/oder Zählerschränke, mindestens eine erste langgestreckte Gehäusekantenverbindungsleiste (6a-6e), weiche nach innen ragend mit zumindest einer Kante (8a) mindestens einer Wand (10a-10d) des ersten Schrankes (2a-2e) verbunden ist, mindestens eine zweite langgestreckte Gehäusekantenverbindungsleiste (12a-12e), welche nach innen ragend mit zumindest einer Kante (14a) mindestens einer Wand (16a-16d) des zweiten Schrankes (4a-4e) verbunden ist, und mindestens ein langgestrecktes Verbindungselement (20a-20c) umfasst, welches mit den Gehäusekantenverbindungsleisten (6a-6e, 12a-12e) von außen wiederlösbar verbunden ist, so dass eine Verbindung der Schränke (2a-2e, 4a-4e) bewirkt ist, **dadurch gekennzeichnet, dass** mindestens eine der Gehäusekantenverbindungsleisten (6a-6e, 12a-12e) in ihrer Längserstreckungsrichtung zumindest eine nutförmige Ausnehmung (26) aufweist, in welche zumindest eine der Wände (10a-10d, 16a-16d) eingeschoben und von dieser gehalten ist.

2. Schrankanordnung nach Anspruch 1, **dadurch gekennzeichnet, dass** jede der Gehäusekantenverbindungsleisten (6a-6e, 12a-12e) mindestens eine Ausnehmung (22) aufweist, wobei das Verbindungselement (20a-20c) mindestens eine Rastvorrichtung (24) aufweist, welche mit der mindestens einen Ausnehmung (22) der jeweiligen Gehäusekantenverbindungsleiste (6a-6e, 12a-12e) verrastet: ist.

3. Schrankanordnung nach Anspruch 1 oder 2, **dadurch gekennzeichnet, dass** das Verbindungselement (20a-20c) mit der jeweiligen Gehäusekantenverbindungsleiste (6a-6e, 12a-12e) durch mindestens jeweils ein Befestigungsmittel (30) verbunden ist, wobei das Befestigungsmittel (30) so angeordnet; ist, dass die jeweiligen Schränke (2a-2e, 4a-4e) in mindestens zwei Raumrichtungen gegeneinander verspannt sind.

4. Schrankanordnung nach Anspruch 3, **dadurch gekennzeichnet, dass** die Befestigungsmittel (30) Schraubverbindungen sind, welche unter einem Winkel zwischen 10 bis 80 Grad, bevorzugt unter einem Winkel von 45 Grad, in Querschnittsansicht zur Erstreckungsrichtung der Wände (10a-10d, 16a-16d) in die jeweiligen Gehäusekantenverbindungsleisten (6a-6e, 12a-12e) eingreifen.

5. Schrankanordnung nach einem der vorherigen Ansprüche, **dadurch gekennzeichnet, dass** senkrecht zu den Wänden (10a-10d, 16a-16d) jeweils weitere Wände (34a, 34b, 36a, 36b) angeordnet sind, wobei zwischen dem Verbindungselement (20a-20c) und mindestens einer der Gehäusekantenverbindungsleisten (6a-6e, 12a-12e) mindestens ein Verbindungsprofil (32a-32f) befestigt ist, welches dafür vorgesehen ist, einen Spalt zwischen den weiteren Wänden (34a, 34b, 36a, 36b) zu überdecken.

## Claims

1. Cabinet arrangement having at least two electrical cabinets, in particular interconnected switch cabinets and/or meter cabinets and/or distribution cabinets, which are distributed one beside the other in each case by means of a cabinet-connecting system (1a-1e), wherein, for the mechanical connection of the at least two cabinets (2a-2e, 4a-4e), in particular switch cabinets and/or distribution cabinets and/or meter cabinets, the cabinet-connecting system (1a-1e) comprises at least one first elongate housing-edge-connecting strip (6a-6e), which is connected in an inwardly projecting manner to at least one edge (8a) of at least one wall (10a-10d) of the first cabinet (2a-2e), at least one second elongate housing-edge-connecting strip (12a-12e), which is connected in an inwardly projecting manner to at least one edge (14a) of at least one wall (16a-16d) of the second cabinet (4a-4e), and at least one elongate connecting element (20a-20c), which is connected to the housing-edge-connecting strips (6a-6e, 12a-12e) in a re-releasable manner from the outside so as to establish a connection between the cabinets (2a-2e, 4a-4e), **characterized in that** at least one of the housing-edge-connecting strips (6a-6e, 12a-12e) has at least one groove-form aperture (26) in its direction of longitudinal extent, at least one of the walls (10a-10d, 16a-16d) being pushed into said aperture and retained thereby.

2. Cabinet arrangement according to Claim 1, **characterized in that** each of the housing-edge-connecting strips (6a-6e, 12a-12e) has at least one aperture (22), wherein the connecting element (20a-20c) has at least one latching device (24), which is latched to the at least one aperture (22) of the respective housing-edge-connecting strip (6a-6e,12a-12e).

3. Cabinet arrangement according to Claim 1 or 2, **characterized in that** the connecting element (20a-20c) is connected to the respective housing-edge-connecting strip (6a-6e, 12a-12e) by at least in each case one fastening means (30), wherein the fastening means (30) is arranged such that the respective cabinets (2a-2e, 4a-4e) are braced in relation to one another in at least two directions in space.

4. Cabinet arrangement according to Claim 3, **characterized in that** the fastening means (30) are screw-action connections which engage in the respective housing-edge-connecting strips (6a-6e, 12a-12e) at an angle between 10 and 80 degrees, preferably at an angle of 45 degrees, as seen in cross section in relation to the direction in which the walls (10a-10d, 16a-16d) extend.

5. Cabinet arrangement according to one of the preceding claims, **characterized in that** the walls (10a-10d, 16a-16d) have in each case further walls (34a, 34b, 36a, 36b) arranged perpendicularly in relation to them, wherein at least one connecting profile (32a-32f) is fastened between the connecting element (20a-20c) and at least one of the housing-edge-connecting strips (6a-6e, 12a-12e), and said connecting profile is provided in order to cover over a gap between the further walls (34a, 34b, 36a, 36b).

## Revendications

1. Ensemble d'armoires comprenant au moins deux armoires électriques, en particulier des armoires de commutateurs et/ou de compteurs et/ou de distributeurs, reliées chacune au moyen d'un système de raccordement d'armoires (1a-1e), le système de raccordement d'armoires (1a-1e) comprenant, pour le raccordement mécanique des au moins deux armoires (2a-2e, 4a-4e), en particulier des armoires de commutateurs et/ou de distributeurs et/ou de compteurs, au moins une première barre de raccordement de bord de boîtier allongée (6a-6e) qui est reliée de manière saillante vers l'intérieur à au moins un bord (8a) d'au moins une paroi (10a-10d) de la première armoire (2a-2e), au moins une deuxième barre de raccordement de bord de boîtier allongée (12a-12e) qui est reliée de manière saillante vers l'intérieur à l'au moins un bord (14a) de l'au moins une paroi (16a-16d) de la deuxième armoire (4a-4e) et au moins un élément de raccordement allongé (20a-20c) qui est relié aux barres de raccordement de bord de boîtier (6a-6e, 12a-12e) de manière amovible depuis l'extérieur de façon à connecter les armoires (2a-2e, 4a-4e),
**caractérisé en ce que** l'une au moins des barres de raccordement de bord de boîtier (6a-6e, 12a-12e) comporte dans sa direction longitudinale au moins un évidement (26) en forme de rainure dans lequel au moins une des parois (10a-10d, 16a-16d) est insérée et maintenue par celui-ci.

2. Ensemble d'armoire selon la revendication 1, **caractérisé en ce que** chacune des barres de raccordement de bord de boîtier (6a-6e, 12a-12e) comporte au moins un évidement (22), l'élément de raccordement (20a-20c) comportant au moins un dispositif d'encliquetage (24) qui est encliqueté à l'au moins un évidement (22) de la barre de raccordement de bord de boîtier respective (6a-6e, 12a-12e) .

3. Ensemble d'armoire selon la revendication 1 ou 2, **caractérisé en ce que** l'élément de raccordement (20a-20c) est raccordé à la barre de raccordement de bord de boîtier respective (6a-6e, 12a-12e) par au moins un moyen de fixation (30), le moyen de fixation (30) étant disposé de telle sorte que les armoires respectives (2a-2e, 4a-4e) soient serrées l'une contre l'autre dans au moins deux directions spatiales.

4. Ensemble d'armoire selon la revendication 3, **caractérisé en ce que** les moyens de fixation (30) sont des raccordements à vis qui s'engagent dans les barres de raccordement de bord de boîtier respectives (6a-6e, 12a-12e) en formant un angle compris entre 10 à 80 degrés, de préférence un angle de 45 degrés, dans une vue en coupe transversale par rapport à la direction d'extension des parois (10a-10d, 16a-16d).

5. Ensemble d'armoire selon l'une des revendications précédentes, **caractérisé en ce que** d'autres parois (34a, 34b, 36a, 36b) sont disposées perpendiculairement aux parois (10a-10d, 16a-16d), au moins un profil de raccordement (32a-32f), qui est destiné à couvrir un espace entre les autres parois (34a, 34b, 36a, 36b), est fixé entre l'élément de raccordement (20a-20c) et l'une au moins des barres de raccordement de bord de boîtier (6a-6e, 12a-12e).
